# EUROPEAN PATENT APPLICATION

(11) **EP 2 099 138 A2**
(43) Date of publication of application: **09.09.2009**
(21) Application number: 09003195.6
(22) Date of filing: 05.03.2009
(51) Int. Cl.: H04B 3/54

(54) **Device for sharing a host with multiple users through power lines in a building**

(30) Priority: 05.03.2008 TW 97203676 U
(71) Applicant: Laurus Trading FZCO, Dubai (AE)
(72) Inventor: Ming, Shih Chuan, Taipei (TW)
(74) Representative: Obst, Bernhard

(57) **Abstract**

The invention relates to a device for sharing a computer host with multiple users through power lines in a building has a primary transceiver and at least one secondary transceiver. The primary transceiver is used to connect a computer host and the power lines, and has a bi-directional communication with the computer host via the power lines. The secondary transceiver also connects to the power lines and other computer peripheral devices except a host. The secondary transceiver together with the computer peripheral devices are operated as an individual personal computer, thus sharing the computer host with multiple users.

## Description

### BACKGROUND OF THE INVENTION

### 1. Field of the Invention

The invention relates to a device for sharing a host with multiple users, and more particularly to a device for sharing a host with multiple users using power line communication technique.

### 2. Description of Related Art

As the information industry technology develops, people use computers more frequently either in office or home, and a single person may own more than one computer. Further, a large company often uses and manages many computers.

A computer usually comprises several basic apparatus such as a host, a monitor and at least one input device like a keyboard or a mouse. The host achieves connections to other apparatus with data transmission cables. For a company, a school and the like that requires a large number of computers, the appreciable high cost for purchasing, maintaining and managing the hardware is a relative heavy burden. In addition to the hardware, the matters related to the software may be another problem.

To overcome the shortcomings, the present invention provides a method for sharing a host with multiple users to mitigate or obviate the aforementioned problems.

### SUMMARY OF THE INVENTION

The main objective of the present invention is to provide a device for sharing a computer host with multiple end users through power lines in a building thus reducing the cost purchasing, maintaining and managing of the hardware since each of the end user does not require an individual host.

To accomplish the objective, a device for sharing a computer host with multiple users through power lines in a building has a primary transceiver and at least one secondary transceiver. The primary transceiver is used to connect a computer host and the power lines, and has a bi-directional communication with the computer host via the power lines. The secondary transceiver also connects to the power lines and other computer peripheral devices such as a keyboard, a monitor, a mouse and the like except a host. The secondary transceiver together with the computer peripheral devices are operated as an individual personal computer (PC), thus sharing the computer host with multiple users.

To accomplish the objective according to one embodiment a device for sharing a computer host with multiple users through power lines in a building comprises
a primary transceiver for connecting to the computer host and the power lines, having
a first CPU;
a host signal capture module connected to an input terminal of the first CPU, receiving signals and data from the computer host and transmitting the received signals to the first CPU for processing; and
a first host signal transceiver connected to an output terminal of the first CPU and the power lines, feeding the processed signals and data output from the first CPU to the power lines,
at least one secondary transceiver for connecting to the power lines, having
a second CPU;
a second host signal transceiver connected to an input terminal of the second CPU to retrieve the signals and data supplied from the primary transceiver through the power lines; and
a peripheral device control module connected by a first output terminal of the second CPU for electrically connecting to and controlling multiple peripheral apparatus based on commands from the computer host, and receiving and transmitting requests from the multiple peripheral apparatus to the primary transceiver through power lines.

According to one embodiment the first host signal transceiver further receives the requests output from each of the at least one secondary transceiver through power lines and transmits the requests to the computer host.

According to one embodiment the second CPU further connects to a USB module for connecting to and managing USB compatible apparatus.

According to one embodiment the primary transceiver determines operating authority of the at least one secondary transceiver.

According to one further embodiment the operating authority comprises a scheduled turn-on and turn-off time of the at least one secondary transceiver, accessible and inaccessible websites of the at least one secondary transceiver, and file accessing authority of the at least one secondary transceiver.

By determining the operating authority the primary transceiver stays in control of the secondary receiver. By forwarding request from the secondary transceiver the control, which is influenced by the requests, can be maintained by the computer host.

Other objectives, advantages and novel features of the invention will become more apparent from the following detailed description when taken in conjunction with the accompanying drawings.

### BRIEF DESCRIPTION OF THE DRAWINGS

Fig. 1 is an operational view of a device for sharing a host with multiple users based on power line communication technique in accordance with the present invention;
Fig. 2 is a block diagram of a primary transceiver of the device in accordance with the present invention; and
Fig, 3 is a block diagram of a second transceiver of the device in accordance with the present invention.

### DETAILED DESCPIPTION OF THE PREFERRED EMBODIMENT

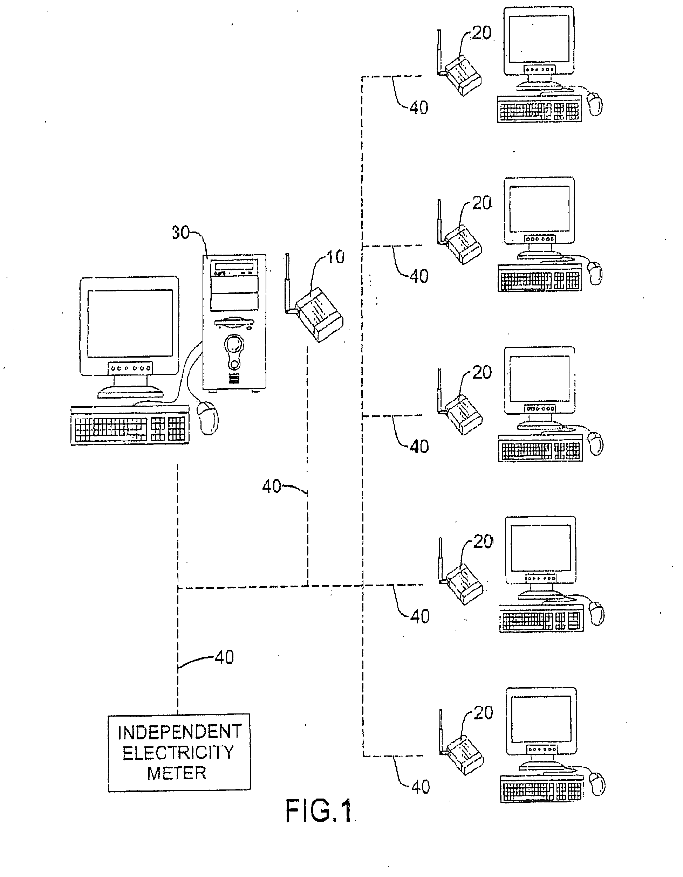

With reference to Fig. 1, a device in accordance with the present invention is used to share a host with multiple different user based on power line communication (PLC) technique, and ensure that the operations of the different user are independent to one another without mutual affection. The device comprises a primary transceiver (10) and at least one secondary transceiver (20)

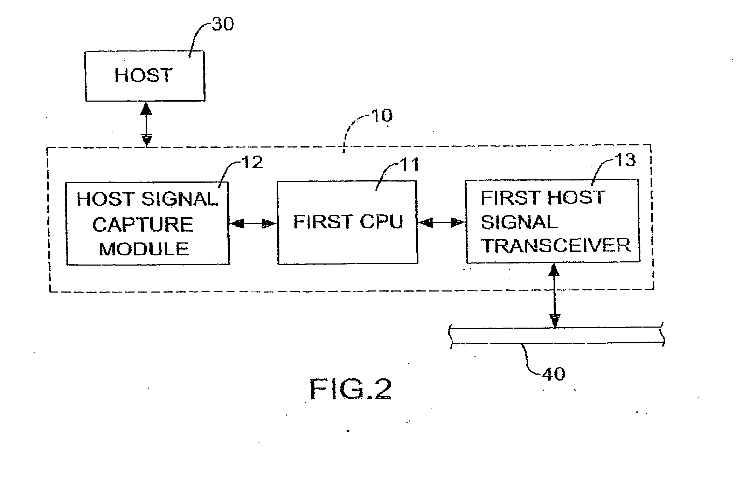

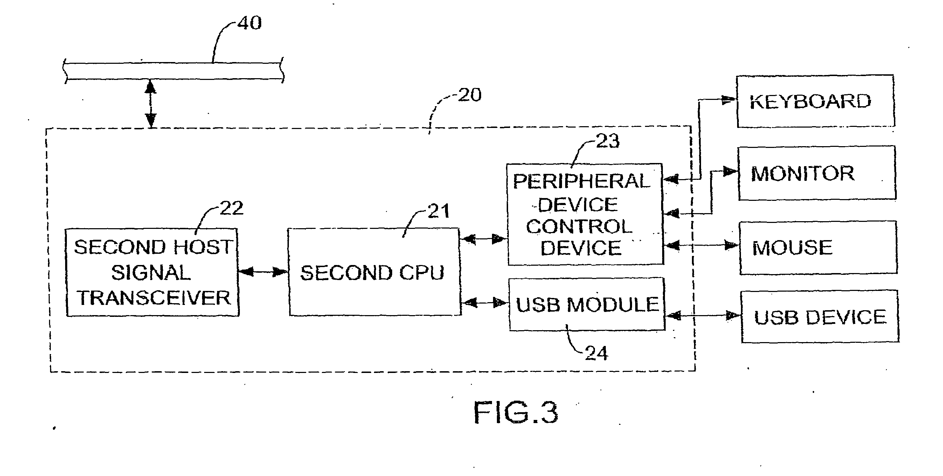

With further reference to Figs. 2 and 3, the primary transceiver (10) is designed to cooperate to a computer host (30), and electrically connects to the computer host (30) and power lines (40) in a building, The primary transceiver (10) comprises a first central processing unit (CPU) (11), a host signal capture module (12) and a first host signal transceiver (13).

The host signal capture module (12) is connected to an input terminal of the first CPU (10), receives signals from the computer host (30) and transmits the received signals to the first CPU (11) for processing.

The first host signal transceiver (13) is connected to an output terminal of the first CPU (10) and the power lines (40). The first host signal transceiver (13) feeds the processed signals output from the first CPU (10) to the power lines (40) so that each of the at least one secondary transceiver (20) can receive necessary Information via the power lines (40). The first host signal transceiver (13) also receives requests output from lines each of the at least one secondary transceiver (20) and transmits them to the computer host (30).

Each of the at least one secondary transceiver (20) has a second CPU (21), a second host signal transceiver (22), a peripheral device control module (23) and a universal serial bus (USB) module (24).

The second host signal transceiver (22) is connected to an input terminal of the second CPU (21) to retrieve Signals and data supplied from the primary transceiver (10) via the power lines (40).

The peripheral device control module (23) is connected to an output terminal of the second CPU (21) and may further electrically connect to multiple peripheral apparatus; for example a keyboard, a monitor and a mouse. Based on received commands from the computer host (30), the peripheral device control module (23) controls the peripheral apparatus. The peripheral device control module (23) also receives requests from the multiple peripheral apparatus via the power lines (40) and transmits the requests to the primary transceiver (10).

The USB module (24) is connected to another output terminal of the second CPU (21) for controlling USB compatible devices such as a portable storage disk, a USB disk writer and the like connected to the at least one secondary transceiver (20).

The primary transceiver (10) is able to determine operating authority of each secondary transceiver (20), for example setting a scheduled turn-on or turn-off time, accessible or inaccessible website lists, or file accessing authority of the secondary transceiver (20).

Because the power lines have been distributed in the building, the device in accordance with the present invention can easily share a computer host with multiple end users without using additional complex data cables. Each end user only needs to prepare and link peripheral apparatus to a secondary transceiver, and operates the peripheral apparatus in the manner the same as operating a normal personal computer.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A device for sharing a computer host with multiple users through power lines in a building, the device comprising:
a primary transceiver for connecting to the computer host and the power lines, having
a first CPU;
a host signal capture module connected to an input terminal of the first CPU, receiving signals and data from the computer host and transmitting the received signals to the first CPU for processing; and
a first host signal transceiver connected to an output terminal of the first CPU and the power lines, feeding the processed signals and data output from the first CPU to the power lines,
at least one secondary transceiver for connecting to the power lines, having
a second CPU;
a second host signal transceiver connected to an input terminal of the second CPU to retrieve the signals and data supplied from the primary transceiver through the power lines; and
a peripheral device control module connected by a first output terminal of the second CPU for electrically connecting to and
controlling multiple peripheral apparatus based on commands from the computer host, and receiving and transmitting requests from the multiple peripheral apparatus to the primary transceiver through power lines.

2. The device as claimed in claim 1, wherein the first host signal transceiver further receives the requests output from each of the at least one secondary transceiver through power lines and transmits the requests to the computer host.

3. The device as claimed in claim 1 or 2, wherein the second CPU further connects to a USB module for connecting to and managing USB compatible apparatus.

4. The device as claimed in one of the claims 1 to 3, wherein the primary transceiver determines operating authority of the at least one secondary transceiver.

5. The device as claimed claim 4, wherein the operating authority comprises a scheduled turn-on and turn-off time of the at least one secondary transceiver, accessible and inaccessible websites of the at least one secondary transceiver, and file accessing authority of the at least one secondary transceiver.
